# EUROPEAN PATENT APPLICATION

(11) **EP 0 986 167 A2**
(43) Date of publication of application: **15.03.2000**
(21) Application number: 99116038.3
(22) Date of filing: 16.08.1999
(51) Int. Cl.: H02M 7/5387

(54) **H Bridge circuit**

(30) Priority: 04.09.1998 JP 25097798
(71) Applicant: MOTOROLA, INC., Schaumburg, IL 60196 (US)
(72) Inventor: Fukazawa, Hidetaka, Jurokawagun, Miyagi-ken, 981-3624 (JP)
(74) Representative: Gibson, Sarah Jane

(57) **Abstract**

An H bridge circuit which is used effectively over a wide range of source voltages is provided. FET Q1, Q2 of N and P MOS type are connected in parallel to form a first parallel circuit which is connected in series with a FET Q3 of NMOS type. FET Q4, Q5 of N and P MOS type are connected in parallel to form a second parallel circuit which is connected in series with an FET Q6 of NMOS type. A series circuit including the first parallel circuit and FET Q3 is connected in parallel with a series circuit including the second parallel connection and FET Q6. Output terminals T1 and T2 to be connected with a load are connected to the common node between the first parallel circuit and FET Q3 and to the common node between the second parallel circuit and FET Q6.

## Description

### Field of the Invention

The present invention relates to an H bridge circuit employing MOS-type field effect transistors (FETs).

### Background of the Invention

H bridge circuits are classified into two types: NMOS-NMOS type and PMOS-NMOS type.

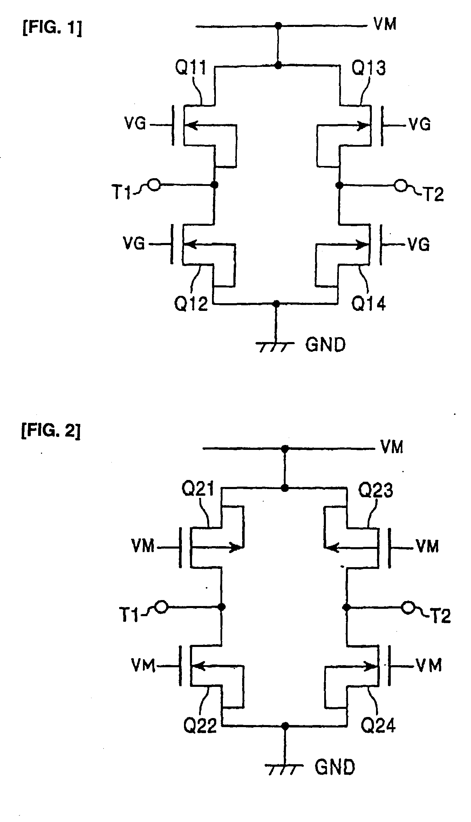

Fig. 1 shows an arrangement of an H bridge circuit of NMOS-NMOS type. In Fig. 1, the H bridge circuit includes a series circuit having a source of a transistor Q11 and a drain of a transistor Q12 connected with each other, and a series circuit including a source of a transistor Q13 and a drain of a transistor Q14 connected with each other. The drains of the transistors Q11 and Q13 are connected with each other, and the sources of the transistors Q12 and Q14 are connected with each other, to a connecting point between the source of the transistor Q11 and the drain of the transistor Q12 and to a connecting point between the source of the transistor Q13 and the drain of the transistor Q14 are connected output terminals T1 and T2, respectively, which are also connected to loads, respectively. To a common connecting point between the drains of the transistors Q11 and Q13 is applied a source voltage VM, and to a common connecting point between the sources of the transistors Q12 and Q14 is connected a ground point GND at which a reference voltage is set.

With such an H bridge circuit of NMOS-NMOS type, in order to achieve an efficient switch by lowering the on-resistance, a voltage VG that is higher than the source voltage VM is generated by a voltage boost circuit (not shown) and applied to the gates of the NMOS transistors.

Fig. 2 shows an arrangement of a prior art H bridge circuit of PMOS-NMOS type.

In Fig. 2, the H bridge circuit includes a series circuit including a drain of a transistor Q11 and a drain of a transistor Q22 connected with each other and a series circuit including a drain of a transistor Q23 and a drain of a transistor Q24 connected with each other. The sources of the transistors Q21 and Q23 are connected with each other, and the sources of the transistors Q22 and Q24 are also connected with each other; to a connecting point between the drains of the transistor Q21 and Q22 and to a connecting point between the drains of the transistors Q23 and Q24 are connected output terminals T1 and T2, respectively. To a common connecting points between the sources of the transistors Q21 and Q23 is applied a source voltage VM, and a connecting point between the sources of the transistors Q22 and Q24 is connected to a ground point GND.

With such an H bridge circuit of PMOS-NMOS type, because of its complementary MOS (CMOS) configuration, the source voltage VM may be applied to the gate of each NMOS transistor, thereby eliminating the need for a voltage boost circuit.

However, each of the prior art H bridge circuits described above has the following problems.

With a prior art H bridge circuit of NMOS-NMOS type, if the maximum voltage (maximum rated voltage) of the circuit is 15 V, for example, a gate voltage VG that is greater by 5 V to 10 V than the source voltage VM is required; as such, as the source voltage VM increases, a higher gate voltage VG must be applied, resulting in increased size and complexity of the voltage boost circuit. On the other hand, to prevent the withstand voltage of the device from being exceeded, a protection circuit for the gate is required, so that too much gate voltage VG cannot be applied. Because of such requirements, an H bridge circuit of NMOS-NMOS type suffers from the problem that it may be used effectively only in a range where the source voltage is low (2 V to 8 V).

With a prior art H bridge circuit of PMOS-NMOS type, because a PMOS transistor is used, its area efficiency for on-resistance is not efficient as compared to NMOS transistor counterparts. Thus, if the source voltage VM is high, a sufficient gate drive voltage is obtained; however, if the source voltage VM is low, there is a problem that the on-resistance increases, so that it may be used effectively only in a range where the source voltage VM is high (8 V to 15 V).

Accordingly, it is one of the objects of the present invention to provide an H bridge circuit that may be used effectively over a wide range of source voltages.

### Summary of the Invention

An H bridge circuit according to the present invention comprises: a first parallel circuit consisting of a first field effect transistor (FET) of NMOS type and a second FET of PMOS type, said first and second FETs being connected in parallel with each other; a third FET of NMOS type connected in series with said first parallel circuit; a second parallel circuit consisting of a fourth FET of NMOS type and a fifth FET of PMOS type, said fourth and fifth FETs being connected in parallel with each other; a sixth FET of NMOS type connected in series with said second parallel circuit; first and second output terminals respectively connected to a common connecting point between said first parallel circuit and said third FET and to a common connecting point between said second parallel circuit and said sixth FET; and connecting means for forming a third parallel circuit by connecting in parallel a series circuit including said first parallel circuit and said third FET and a series circuit including said second parallel circuit and said sixth FET, and for connecting one end of said third parallel circuit to a source voltage supply line and the other end thereof to a reference voltage line.

According to the present invention, with the first and second parallel circuits, if the source voltage is low, a current path is formed with small on-resistance between the source and drain of the FETs of NMOS type. If the source voltage is high, a current path is formed with small on-resistance between the source and drain of the FETs of PMOS type.

### Brief Description of the Drawings

Fig. 1 shows a circuit diagram of an H bridge circuit of NMOS-NMOS type.
Fig. 2 shows a circuit diagram of an H bridge circuit of PMOS-NMOS type.
Fig. 3 shows a circuit diagram of an H bridge circuit according to one embodiment of the present invention.
Fig. 4 shows a characteristic diagram for depicting on-resistance of field effect transistors connected in parallel, with the source voltage varied.

### Detailed description of the Invention

An embodiment of the invention is described in detail below with reference to the drawings.

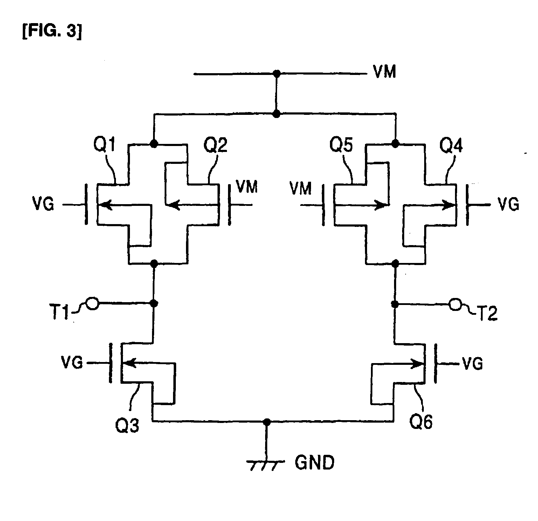

Fig. 3 shows an arrangement of a H bridge circuit according to one embodiment of the present invention. In Fig. 3, a first FET Q1 of NMOS type and a second FET Q2 of PMOS type are connected in parallel with each other. More specifically, a drain of the transistor Q1 and a source of the transistor Q2 are connected, and a source of the transistor Q1 and a drain of the transistor Q2 are connected. Furthermore, the parallel circuit including the transistors Q1 and Q2 is connected in series with a NMOS transistor Q3. More specifically, the source of the transistor Q1 and the drain of the transistor Q2 are connected to a drain of the third FET Q3 of NMOS type.

Similarly, a fourth FET Q4 of NMOS type and a fifth FET Q5 of PMOS type are connected in parallel with each other, wherein a drain of the transistor Q4 and a source of the transistor Q5 are connected, and a source of the transistor Q4 and a drain of the transistor Q5 are connected. Furthermore, the parallel circuit including the transistors Q4 and Q5 is connected in series with a sixth transistor Q6 of NMOS type, wherein the source of the transistor Q4 and the drain of the transistor Q5 are connected to a drain of the NMOS transistor Q6.

To a connecting point where the parallel circuit including the transistors Q1 and Q2 is connected in series with the transistor Q3. That is, a common connecting point between the source of the transistor Q1, the drain of the transistor Q2, and the drain of the transistor Q3, a first output terminal T1 for connecting a load is connected. To a connecting point where the parallel circuit including the transistors Q4 and Q5 is connected in series with the transistor Q6. That is, a common connecting point between the source of the transistor Q4, the drain of the transistor Q5, and the drain of the transistor Q6, a second output terminal T2 for connecting a load is connected.

Furthermore, a series circuit formed by the parallel circuit (first parallel circuit) including the transistors Q1 and Q2 and the transistor Q3 is connected in parallel with a series circuit formed by the parallel circuit (second parallel circuit) including the transistors Q4 and Q5 and the transistor Q6 using connector such as wires or metal layers. More specifically, the drain of the transistor Q1 and the source of the transistor Q2 are connected to the drain of the transistor Q4 and the source of the transistor Q5. The connection point of them is connected to a supply line so that a source voltage VM is applied thereto. Additionally, the source of the transistor Q3 and the source of the transistor Q6 are connected, and the connection point of them is connected to a ground (GND) line where a reference voltage is set.

Next, the operation of this H bridge circuit is described.

Supposing that the voltage VM is applied to the common connecting points for the transistors Q1, Q2, Q4 and Q5, and the common connecting point for the transistor Q3 and Q6 is grounded.

Under this condition, when the voltage VG is applied to the gates of the transistors Q1 and Q6, GND is applied to the gates of the transistors Q2, Q3, and Q4, and the voltage VM is applied to the gate of Q5, then the transistors Q1, Q2, and Q6 turn on. As a result, a close circuit is formed, the circuit including: the supply of the voltage VM, parallel circuit of the transistors Q1 and Q2, output terminal T1, load (not shown), an output terminal T2, transistor Q6 and GND, as such, the current flows from the output terminal T1 to the load.

On the other hand, when the voltage VG is applied to the gates of the transistors Q4 and Q3, GND is applied to the gates of Q1, Q5, and Q6, and the voltage VM is applied to the gate of Q2, then the transistors Q4, Q5, and Q3 turn on. As a result, a close circuit is formed, the circuit including: the supply of the voltage VM; parallel circuit of the transistors Q4 and Q5; output terminal T2; load (not shown); output terminal T1; transistor Q3; and GND; as such, the current flows from the output terminal T2 to the load.

Thus, when a DC motor, for example, is connected as the load, the direction of the rotation for the motor can be flexibly controlled by selectively providing the gate voltage. Furthermore, by varying the source voltage VM, the speed of the rotation for the motor can be flexibly controlled.

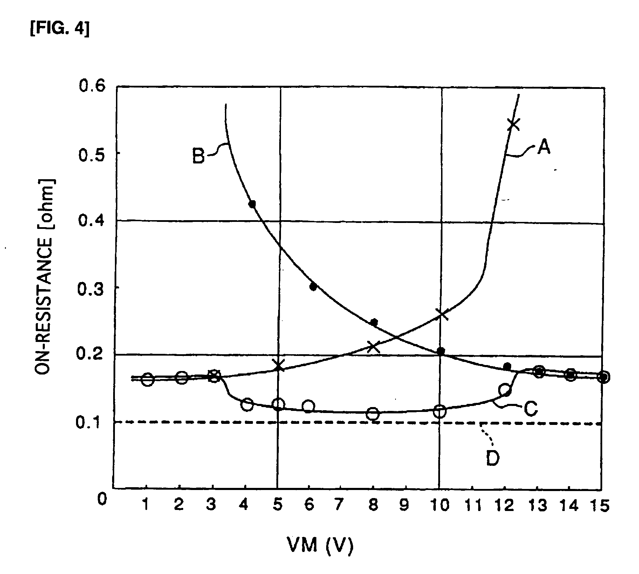

Fig. 4 shows the measurement results for the on-resistance between the source and drain, obtained by varying the voltage VM over a range from 1 V to 15 V, with the maximum upper-limit voltage of the circuit at 15 V.

In this graph, characteristic curve A denotes variations in the on-resistance between the source and drain of the FET of NMOS type on the VM side. Characteristic curve B denotes variations in the on-resistance between the source and drain of the FET of PMOS type. The on-resistance of the parallel circuit formed by connecting the source and drain of the FETs of NMOS and PMOS types is denoted by characteristic curve C. Note that dotted line D denotes the on-resistance between the source and drain of the standalone NMOS-type FETs on the GND side (that is, transistors Q3 and Q6 in Fig. 3), which is sufficiently small, over the wide range of the voltage VM.

As is clear from Fig. 4, the on-resistance between the source and drain of the FETs of NMOS type is small over a range where the voltage VM is low (1 V to 8 V). The on-resistance of the NMOS FET is high over a range where the voltage VM is high (8 V to 15 V). On the other hand, the on-resistance between the source and drain of the FETs of PMOS type is small over a range where the voltage VM is high (8 V to 15 V). Thus, even if the voltage VM varies over a wide range from 1 V to 15 V, the on-resistance of the parallel circuit made of the FETs of NMOS and PMOS types is small. Especially over a range of the voltage VM from 4 V to 12 V, the on-resistance of the parallel circuit is very small.

Thus, with the first parallel circuit formed by the transistors Q1 and Q2, if the source voltage VM is low, a current path is formed with a small on-resistance between the source and drain of the NMOS-type FET Q1. If the source voltage VM is high, a current path is formed with a small on-resistance between the source and drain of the PMOS-type FET Q2.

Similarly, with the second parallel circuit formed by the transistors Q4 and Q5, if the source voltage VM is low, a current path is formed with a small on-resistance between the source and drain of the NMOS-type FET Q4. If the source voltage VM is high, a current path is formed with a small on-resistance between the source and drain of the PMOS-type FET Q5.

As a result, the need for a large, complex voltage boost circuit, and the concern that the withstand voltage of the FET may be exceeded, are eliminated. Especially, even if the source voltage VM changes drastically, an H bridge circuit that can be driven with large current while maintaining a small on-resistance can be realized, so that various application circuits may be implemented.

As described in detail above, according to the present invention, an H bride circuit that may be used effectively over a wide range of source voltages can be provided.

## Claims

1. An H bridge circuit comprising:
a first parallel circuit including a first FET of NMOS type and a second FET of PMOS type, said first and second FETs being connected in parallel with each other;
a third FET of NMOS type connected in series with said first parallel circuit;
a second parallel circuit consisting of a fourth FET of NMOS type and a fifth FET of PMOS type, said fourth and fifth FETs being connected in parallel with each other;
a sixth FET of NMOS type connected in series with said second parallel circuit;
first and second output terminals respectively connected to a common connecting point between said first parallel circuit and said third FET and to a common connecting point between said second parallel circuit and said sixth FET; and
connecting means for forming a third parallel circuit by connecting in parallel a series circuit including said first parallel circuit and said third FET and a series circuit including said second parallel circuit and said sixth FET, and for connecting one end of said third parallel circuit to a source voltage supply line and the other end thereof to a reference voltage line.

2. An H bridge circuit according to claim 1, wherein the FETs are power MOS FET.

3. An H bridge circuit according to claim 1, wherein voltages applied to each gate of the FETs are switched within a voltage level of the power supply line and a voltage level of the reference voltage line.

4. An H bridge circuit according to claim 1, wherein a motor is connected between the first and the second output terminals.

5. A driver circuit comprising a plurality of circuit connected in parallel between a first power supply line and a second power supply line, the each circuit comprising:
a parallel circuit having a first transistor with first conductivity type and a second transistor, connected in parallel to the first transistor, with second conductivity type being different from the first conductivity type, one end of the parallel circuit is connected to the first power supply line;
an output terminal connected to other end of the parallel circuit; and
a third transistor with first conductivity type connected between the output terminal and the second power supply line.

6. The driver circuit according to claim 5, wherein the transistors are MOS FET.

7. The driver circuit according to claim 6, wherein voltages applied to each gate of the FETs are switched within a voltage level of the power supply line and a voltage level of the reference voltage line.

8. The driver circuit according to claim 5, wherein a motor is connected to the output terminal.

9. The driver circuit according to claim 5, wherein the driver circuit forms an H bridge circuit.
